# EUROPEAN PATENT SPECIFICATION

(11) **EP 2 148 785 B1**
(45) Date of publication and mention of the grant of the patent: **29.02.2012**
(21) Application number: 08761668.6
(22) Date of filing: 14.05.2008
(51) Int. Cl.: B60D 1/32

(54) **DEVICE FOR PREVENTING AN ARTICULATED VEHICLE FROM JACKKNIFING AND/OR FOR STABILISING DRIVING**
VORRICHTUNG ZUR VERMEIDUNG DES EINKNICKENS EINES GELENKFAHRZEUGS UND/ODER ZUR FAHRSTABILISIERUNG
DISPOSITIF SERVANT A EMPECHER UN VEHICULE ARTICULE DE SE DEPORTER ET/OU A STABILISER LA CONDUITE

(30) Priority: 15.05.2007 FI 20075352
(43) Date of publication of application: 03.02.2010
(73) Proprietor: Pyykkönen, Pentti, 31760 Urjala (FI)
(72) Inventor: Pyykkönen, Pentti, 31760 Urjala (FI)
(74) Representative: LEITZINGER OY
(86) International application number: PCT/FI2008/050272
(87) International publication number: WO 2008/139040

(56) References cited:
- EP-A2- 0 253 964
- FR-A1- 2 786 436
- US-A- 3 305 246
- US-A- 3 362 727
- US-A- 3 379 456
- US-A- 3 394 949
- US-A- 3 394 949
- US-A- 3 659 874
- US-A- 3 871 686
- US-A- 4 993 738
- US-A- 5 016 899
- US-A- 5 016 899

## Description

The invention relates to a device for preventing an articulated vehicle from jackknifing and/or for stabilising driving according claim 1.

Depending on conditions, a vehicle may start to skid due to a gust of wind, a curve and/or slippery road conditions. Brakes are applied in an attempt to correct the situation by reducing speed. In the case of articulated vehicles, however, a heavy trailer will tend to continue at the former speed and on the former course. From this follows the "jackknifing" of the trailer with respect to the tractor and the first load section of the articulated vehicle. The majority of accidents involving articulated vehicles are caused by the uncontrollable movement of rear load section.

US 5 016 899 shows an apparatus according to preamble of claim 1. For tensioning the putting cable, an air spring is used to slide the winding means in a fore-and-aft direction. It is difficult to adjust the length of pulling cable to different distances between the ends of load sections.

US 3 722 919 A discloses a cable mounted between the load sections of an articulated vehicle, one end of which cable is wound on a braked cable drum loaded by a spring in the direction of tensioning of the cable. The cable drum brake operates only when braking the vehicle, which prevents the cable wire from lengthening (reeling off/unwinding). This single-cable device does not prevent the initial movement of jackknifing sufficiently, which would be important, or stabilise the movement between load sections during driving.

The aim of the invention is obviate the above drawbacks and to provide a device for efficiently preventing the jackknifing of an articulated vehicle already during the initial movement and, in addition, for stabilising the mutual movement of the load sections during driving.

This aim is achieved by means of the invention, on the basis of the characteristics disclosed in the appended claim 1. The dependent claims disclose preferred embodiment of the invention.

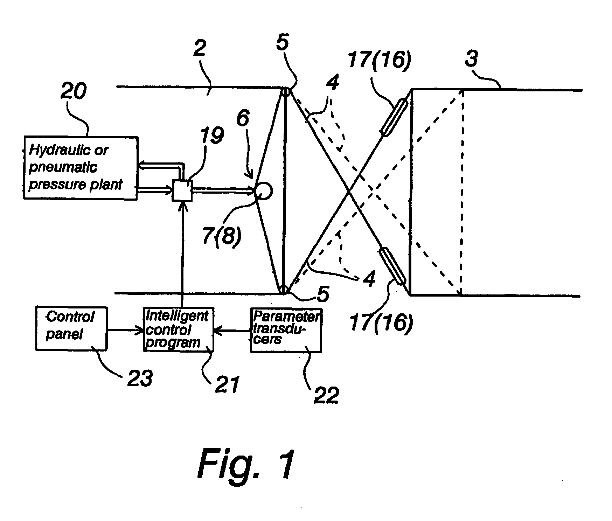

One embodiment of the invention is described in greater detail in the following, with reference to the accompanying drawings in which
- Figure 1: shows a diagrammatic top view of a part of an articulated vehicle implementing the device according to the invention,

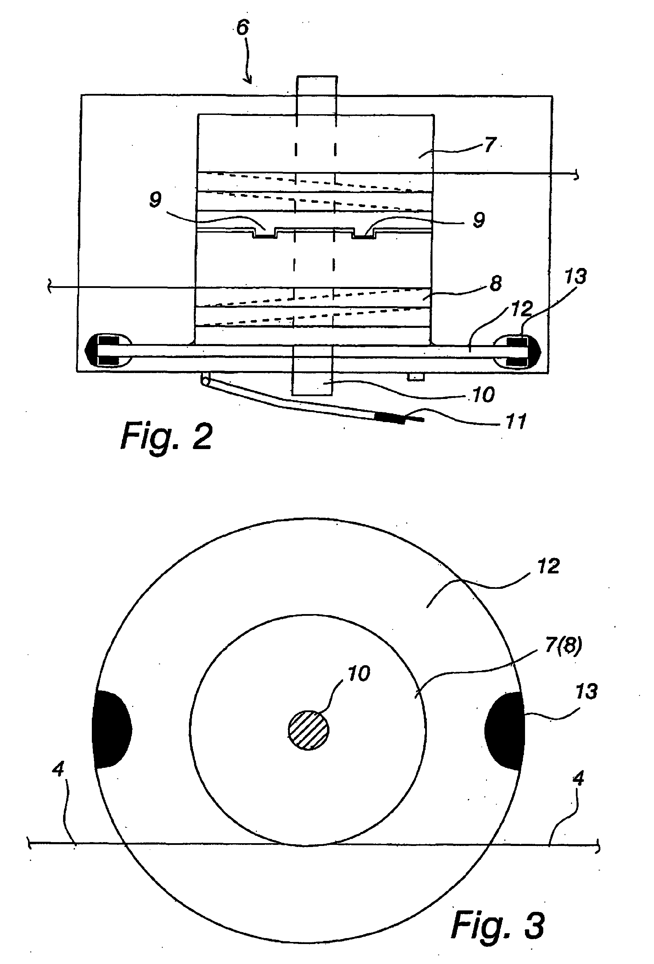

- Figure 2: shows in greater detail the winding means of the device with braking means, as seen from the side,
- Figure 3: shows the device part of Figure 2 as seen from above, and
- Figure 4: shows one embodiment of the pulling means of the device according to the invention.

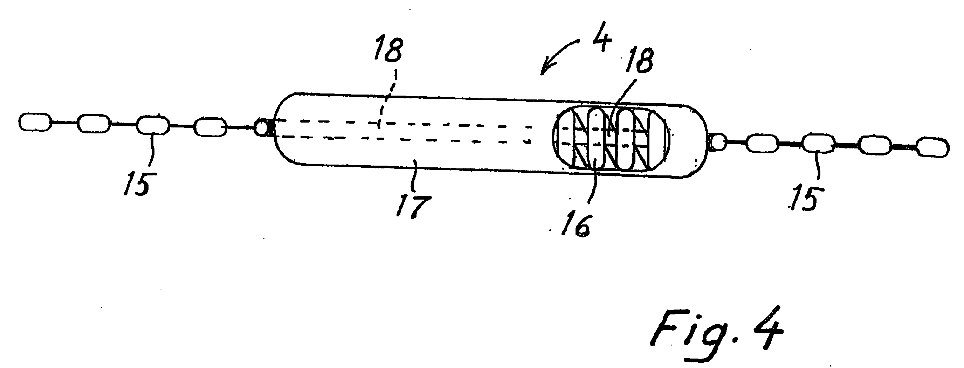

The device according to the invention comprises spring-loaded pulling means 4 which are positioned crosswise and connected between the ends of the load sections 2, 3 of the articulated vehicle. Figure 4 shows in greater detail one embodiment of the pulling means 4. In this example, the pulling means is comprised of a chain or chains 15 and a relatively rigid spring 16, which are extensions of one another. The chain 15 may be replaced with a cable or rope. In the case presented, the coil spring 16 is inside an elongated housing 17 comprising a pulling arm 18 extending through the spring, at one end of which is a flange resting against the end of the spring, while the other end is connected to the chain 15. Instead of a chain 15, at the other end of the pulling arm 18 may also be a suspension hook or suspension loop, which may be openable, if necessary. The pulling means 4 may be attached to hooks or loops at the end corners of the rear load section 3. If two joined loops are used, one of them must be an openable or opening one.

The pulling means 4 are connected to the front load section 2 in such a way that the pulling means 4 are led over sheaves 5 and wound on a rotating winding means 7, 8 which winds the pulling means 4 in or open while rotating, so that while one of the pulling means 4 lengthens, the other shortens. The winding means 7, 8 is provided with braking means 12, 13 by means of which the rotation of the winding means 7, 8 can be dampened or braked by adjustable damping or braking power in both directions of rotation. When the winding means 7, 8 is braked into a position corresponding to the straight driving position of the articulated vehicle, the pulling means 4 are of equal length. When the pulling means 4 are braked in this way crosswise between the ends of the load section 2, 3 of the articulated vehicle, they will prevent the jackknifing of the sections 2, 3 of the articulated vehicle already at an early stage. The relatively rigid spring 16 allows the pulling means 4 to stretch to a limited extent and prevents sudden impacts of inertia forces which might otherwise break the suspensions or the pulling means 4 or act as the impetus for pushing the tractor and the front load section 2 aside from the direction of the driving line. The spring 16, on the other hand, returns the front end of the rear load section 3 towards the driving line. The pulling means 4 may be manufactured using various spring 16 rigidities to correspond to the different tonnages of articulated vehicles. The springs 16 are not necessarily intended for anything else than for keeping the pulling means 4 tight, because the braking means 12 do not form-lock the winding means 7, 8 but brake their rotation with adjustable braking force.

In urban driving or at loading places or in traffic roundabouts or at cross-roads or on particularly winding roads, where driving through steep curves is necessary, the pulling means 4 and the winding means 7, 8 should not prevent driving in curves. For this purpose, it must be possible to adjust the force damping or braking the rotation of the winding means 7, 8 to a sufficiently low level and, if necessary, to switch it off completely. In the embodiment shown, the brake plate 12 of the braking means 12, 13 rotating to the winding means 7, 8 can be braked between the brake pads 13 by friction-locking. The brake may obviously also be a drum brake or other rotation-dampening mechanism. By means of a hydraulic or pneumatic power unit, force can be directed at the brake pads 13 for adjusting the braking force. The power unit may be a separate hydraulic or pneumatic pressure source 20. Valve 19, which adjusts the braking force, is controlled by an intelligent control unit, the program of which adjusts the braking force continuously on the basis of various parameters, such as vehicle speed, deflection angle of the steering wheel, slipperiness of the road, gradient of the road, side winds, etc. obtained from the parameter transducers 22. When starting off, the driver sets the braking force by manual control on the control panel 23 on the basis of the driving response and the load, after which the braking force will remain on automatic control, based on the data obtained from the parameter transducers 22. The driver may change the basic value of the braking force on the basis of experiences gained during driving. Control affecting the adjustment of the braking force may thus take place both by manual control by the driver and by automatic control, which takes into account the basic level of braking force set by the driver. The control for switching the device on and off can only take place through manual control by the driver. In extreme situations, this switching on or off of the device may also take place through automatic control. The adjustment of the braking force of the braking means 12, 13 to the desired magnitude thus takes place dependently of manual control and various parameters. This ensures that a braking force suitable for the load and conditions is on continuously during driving.

Reference numeral 6 designates the entire mechanism to which one end of each pulling means 4 is connected. In the case presented, the winding means 7, 8 is a drum rotating about a vertical shaft, around which drum is wound a sufficient number of rounds of the ends of the pulling means 4 to provide sufficient play for turning between the load sections 2, 3. The body of the winding and braking mechanism 6 of the pulling means 4 can be fixed on the base of the load section 2, for example, by means of bolts.

In the case presented, the winding means 7, 8 is divided into two axially successive reels 7 and 8, each of which receives its respective pulling means 4 end, which is wound a sufficient number of rounds around the corresponding winding means 7 or 8. In normal use, the winding means 7 and 8 are interlocked, for example, by form-locking means 9 between their ends, whereby they will rotate together as a single winding means. However, since the distance between the load sections 2 and 3 varies in different articulated vehicles, there is a need to adjust the device according to the invention to correspond to different distances between the load sections 2 and 3. Thus, by turning the lever 11 upwards, the shaft 10 and the upper winding means 7, which is axially immobile with respect to it, are pushed off the locking with the winding means 8, whereby the winding means 7 and 8 can be rotated around the shaft 10 with respect to one another. In this case, the lengths of the pulling means 4 can be adjusted as desired and the winding means 7 and 8 are interlocked, when the length of the pulling means 4 is correct. Each winding means 7 and 8 may comprise its own return spring or hydraulic motor, which keep the pulling means 4 tight when the form-locking 9 between the reels 7 and 8 is open and the braking of the braking means 12, 13 is released. The return springs or hydraulic motors tend to pull the pulling means 4 around the winding means 7 and 8 and in addition level the lengths of the pulling means 4 when the winding means are detached from one another and able to rotate with respect to one another. The advantage of this is that the length adjustment of the pulling means 4 is easy to carry out and the pulling means 4 can, in addition, be pulled in into storage position when they are not used connected between the load sections. The pre-tensioning force of the pulling means is, for example, 50-100 kg, which the springs 16 will receive.

The brake shoes 13 may alternatively obtain their dynamic force from the same system as the other brakes of the vehicle obtain their dynamic force. Even in this case, the invention does not require any special arrangements in the usual structures of the vehicle. The adjustable damping or braking power can, however, be controlled to be continuously effective during driving, that is, also when the articulated vehicle is not being braked. The advantage is the stabilisation of the driving in normal driving.

Preliminary tests have shown a substantial stabilisation of driving with a full load already when the measured maximum force of the pulling means 4, generated by the braking power of the winding means 7, 8, is less than 200 kg. It was surprisingly also found that the brake power required for stabilising driving decreased as speed increased. The automatic program should, therefore, decrease the brake power as the speed increases. With very low speeds, on the other hand, when the steering wheel is turned sufficiently for driving through a curve, the brake power should be sufficiently low to allow the load sections 2, 3 of the articulated vehicle to turn with sufficient ease with respect to one another.

The mutual locking and release mechanism of the reels of the winding means 7, 8 and the braking means may also be implemented in many other ways and the mechanism disclosed is only one embodiment. The winding means, for example, may be positioned separately in place of the sheaves 5, so long as it is ensured that the winding means 7 and 8 are forced to rotate together during the jackknifing preventing function.

## Claims

1. A device for preventing an articulated vehicle from jackknifing and/or for stabilising driving, the device comprising spring-loaded pulling means (4), which are connected between the ends of the load sections (2, 3) of the articulated vehicle, whereby the load sections are defined as the sections of the vehicle where the cargo is to be placed, and that to connect the pulling means (4) to one of the load sections (2), the said one load section (2) is provided with a rotating winding means (7,8), the pulling means (4) being wound on a rotating winding means (7, 8), which winds the pulling means (4) in or open while rotating in one direction or the other, so that while one of the pulling means lengthens, the other shortens, respectively, and that the winding means (7, 8) is provided with braking means (12, 13), by means of which the rotation of the winding means (7, 8) can be dampened or braked by adjustable damping or braking power in both directions of rotation, **characterized in that** the spring loaded pulling means are positioned crosswise and that the two-part winding means (7, 8) consists of two reels (7, 8) which can be locked to rotate together and released to rotate separately, each reel (7, 8) receiving a separate end of the pulling means (4).

2. A device as claimed in claim 1, **characterised in that** the reels (7, 8) are connected to rewinding springs or hydraulic motors which keep the pulling means (4) tight when the braking of the braking means (12, 13) is released and the reels (7, 8) are detached from mutual form-locking to rotate separately.

3. A device as claimed in claim 1 or 2, **characterised in that** a control means affecting the adjustment of braking power, such as a valve (19), is arranged to be controlled by an intelligent control unit (21) program which receives its input control from both the parameter transducers (22) and the manual control means (23).

4. A device as claimed in claim 3, **characterised in that** the parameter is the speed of the vehicle and the control unit (21) is programmed so that the braking power decreases as speed increases.

## Patentansprüche

1. Vorrichtung zum Verhindern des Einknickens von Gelenkfahrzeugen und/oder zum Stabilisieren der Fahrt, wobei die Vorrichtung federbelastete Zugmittel (4) umfasst, welche zwischen den Enden der Lastabschnitte (2, 3) des Gelenkfahrzeugs verbunden sind, wobei die Lastabschnitte als die Abschnitte des Fahrzeugs definiert sind, wo die Fracht anzuordnen ist, und wobei zum Verbinden der Zugmittel (4) mit einem der Lastabschnitte (2) dieser eine Lastabschnitt (2) mit einem rotierenden Wickelmittel (7, 8) versehen ist, wobei die Zugmittel (4) auf ein rotierendes Wickelmittel (7, 8) gewickelt werden, welches die Zugmittel (4) auf- oder abwickelt, während es in der einen Richtung oder in der anderen rotiert, so dass, während eines der Zugmittel länger wird, jeweils das andere kürzer wird, und wobei das Wickelmittel (7, 8) mit Bremsmitteln (12, 13) versehen ist, mittels welcher die Rotation der Wickelmittel (7, 8) durch einstellbare Dämpfungs- oder Bremskraft in beiden Drehrichtungen gedämpft oder gebremst werden kann, **dadurch gekennzeichnet, dass** die federbelasteten Zugmittel über Kreuz positioniert sind, und dadurch, dass das zweiteilige Wickelmittel (7, 8) aus zwei Spulen (7, 8) besteht, welche verriegelt werden können, um zusammen zu rotieren, und gelöst werden können, um getrennt zu rotieren, wobei jede Spule (7, 8) ein separates Ende der Zugmittel (4) aufnimmt.

2. Vorrichtung nach Anspruch 1, **dadurch gekennzeichnet, dass** die Spulen (7, 8) mit Rückspulfedern oder Hydraulikmotoren verbunden sind, welche die Zugmittel (4) straff halten, wenn das Bremsen der Bremsmittel (12, 13) gelöst wird und die Spulen (7, 8) aus der formschlüssigen Verriegelung miteinander gelöst werden, um getrennt zu rotieren.

3. Vorrichtung nach Anspruch 1 oder 2, **dadurch gekennzeichnet, dass** ein die Einstellung der Bremskraft bewirkendes Steuerungsmittel, wie etwa ein Ventil (19), dafür eingerichtet ist, durch ein Programm einer intelligenten Steuereinheit (21) gesteuert zu werden, welche ihre Eingangssteuerung von sowohl von den Parameter-Wandlern (22) als auch den manuellen Steuerungsmitteln (23) empfängt.

4. Vorrichtung nach Anspruch 3, **dadurch gekennzeichnet, dass** der Parameter die Geschwindigkeit des Fahrzeugs ist und die Steuereinheit (21) so programmiert ist, dass sich die Bremskraft verringert, wenn sich die Geschwindigkeit erhöht.

## Revendications

1. Dispositif servant à empêcher un véhicule articulé de sa déporter et/ou à stabiliser la conduite, le dispositif comprenant des moyens de traction (4) chargés par ressort, qui sont raccordés entre les extrémités des sections de charge (2,3) du véhicule articulé, moyennant quoi les sections de charge sont définies comme les sections du véhicule où le chargement doit être placé, et en ce que pour raccorder les moyens de traction (4) à une des sections de charge (2), ladite une section de charge (2) est pourvue d'un moyen d'enroulement rotatif (7,8), les moyens de traction (4) étant enroulés sur un moyen d'enroulement rotatif (7,8), qui enroule les moyens de traction (4) ou ouvre pendant la rotation dans une direction ou l'autre, de sorte que pendant qu'un des moyens de traction s'allonge, l'autre se raccourcit, respectivement, et en ce que le moyen d'enroulement (7,8) est pourvu de moyens de freinage (12,13), au moyen desquels la rotation du moyen d'enroulement (7,8) peut être amortie ou freinée par une puissance d'amortissement ou de freinage ajustable dans les deux directions de rotation, **caractérisé en ce que** les moyens de traction chargés par ressort sont positionnés transversalementet **en ce que** le moyen d'enroulement en deux parties (7,8) est constitué de deux bobines (7,8), qui peuvent être verrouillées de manière à entrer en rotation conjointement et débloquées de manière à entrer en rotation séparément, chaque bobine (7,8) recevant une extrémité séparée des moyens de traction (4).

2. Dispositif selon la revendication 1, **caractérisé en ce que** les bobines (7,8) sont raccordées à des ressorts de rembobinage ou des moteurs hydrauliques qui gardent les moyens de traction (4) tendus quand le freinage du moyen de freinage (12,13) est déclenché et les bobines (7,8) sont détachées d'un verrouillage par conjonction de forme mutuel de manière à entrer en rotation séparément.

3. Dispositif selon la revendication 1 ou 2, **caractérisé en ce que** un moyen de commande affectant l'ajustement de la puissance de freinage, comme une soupape (19), est agencé de manière à être commandé par un programmed'unité de commande intelligente (21) qui reçoit ses commandes d'entrée depuis à la fois les transducteurs de paramètres (22) et les moyens de commande manuels (23).

4. Dispositif selon la revendication 3, **caractérisé en ce que** le paramètre est la vitesse du véhicule et l'unité de commande (21) est programmée de sorte quela puissance de freinage diminue à mesure que la vitesse augmente.
